# EUROPÄISCHE PATENTSCHRIFT

(11) **EP 3 106 018 B1**
(45) Veröffentlichungstag und Bekanntmachung des Hinweises auf die Patenterteilung: **19.02.2020**
(21) Anmeldenummer: 16171878.8
(22) Anmeldetag: 30.05.2016
(51) Int. Cl.: A01F 15/07

(54) **RUNDBALLENPRESSE MIT MITTELN ZUM UMWICKELN EINES BALLENS**
ROUND BALER WITH MEANS FOR WRAPPING A BALL
PRESSE A BALLE AVEC DES MOYENS POUR EMBALLER UNE BALLE

(30) Priorität: 16.06.2015 DE 102015211000
(43) Veröffentlichungstag der Anmeldung: 21.12.2016
(73) Patentinhaber: Deere & Company, Moline, IL 61265 (US)
(72) Erfinder: Menetrier, Michel, 70100 Beaujeu (FR); Mercier, Jean-Alexis, 03220 Chatelperron (FR); Guerin, Sebastien, 25000 Besancon (FR)
(74) Vertreter: Holst, Sönke

(56) Entgegenhaltungen:
- EP-A1- 2 893 799
- DE-A1-102009 002 439
- US-A1- 2011 067 374

## Beschreibung

Die Erfindung betrifft eine Rundballenpresse, umfassend:
eine Ballenbildungskammer, um deren Umfang antreibbare Förderelemente verteilt sind, die mittels eines Antriebsstranges in Bewegung versetzbar sind, um in die Ballenbildungskammer eingeführtes Material zu einem Ballen zu formen, und
Vorschubmittel, die eingerichtet sind, Wickelmaterial von einem Vorrat in Richtung auf die Ballenbildungskammer zu bewegen, um einen in der Ballenbildungskammer fertiggestellten Ballen zu umwickeln.

### Stand der Technik

Rundballenpressen sind üblicherweise mit Vorrichtungen zum Umwickeln des fertig gestellten Ballens ausgestattet, die durch einen Antrieb in Bewegung versetzt werden und ein Garn, ein Netz oder eine Folie abgeben, das oder die sich um den rotierenden Ballen legt und diesem umhüllt. Derartige Vorrichtungen sind nach der Fertigstellung des Ballens zu aktivieren, was im Stand der Technik auf Veranlassung des Bedieners mittels einer Eingabeeinrichtung erfolgt, nachdem ihm durch eine Anzeigeeinrichtung signalisiert wurde, dass die mittels eines geeigneten Sensors erfasste Ballengröße einen bestimmten Wert erreicht hat. Es wurde auch vorgeschlagen, den Antrieb der Anordnung zum Umwickeln des Ballens selbsttätig zu aktivieren, sobald der Sensor zur Erfassung der Ballengröße anzeigt, dass der gewünschte Ballendurchmesser demnächst erreicht wird (DE 10 2009 002 439 A1).

Das Vorschieben des Wickelmaterials in Richtung auf den Ballenpressraum zu erfolgt durch Rollen, zwischen denen das Wickelmaterial hindurch geführt wird. Diese Rollen sind im Stand der Technik antriebsmäßig mit dem Antrieb der Ballenbildungsmittel gekoppelt, bei denen es sich um Riemen oder Walzen handelt, die um den Umfang der Ballenpresskammer verteilt sind. Die Rollen fördern das Wickelmaterial etwas langsamer als die Umfangsgeschwindigkeit des Ballens in die Ballenbildungskammer hinein, bis das Wickelmaterial durch den Ballen erfasst wird. Anschließend zieht der Ballen das Wickelmaterial vom Vorrat ab und ein Freilauf trennt die Rollen von ihren Antrieb.

Solange die Geschwindigkeit des Ballens mit der Geschwindigkeit der Ballenbildungsmittel übereinstimmt, d.h. kein Schlupf auftritt, wird das Wickelmaterial problemlos vom Ballen mitgenommen. Sollte jedoch Schlupf zwischen dem Ballen und den Ballenbildungsmitteln auftreten, was beispielsweise bei feuchtem Erntegut wie Silage möglich ist, sodass die Umfangsgeschwindigkeit des Ballens kleiner ist als die der Ballenbildungsmittel, ist zwangsläufig auch die Vorschubgeschwindigkeit des Wickelmaterials größer als die Umfangsgeschwindigkeit des Ballens. Das führt zu Schlaufenbildungen im Wickelmaterial, nicht optimaler Umwicklung des Ballens und im ungünstigsten Fall dazu, dass sich das Wickelmaterial um eine Walze des Ballenpressraums wickelt und durch den Bediener entfernt werden muss.

### Aufgabe

Die vorliegende Erfindung hat sich zur Aufgabe gesetzt, das beschriebene Problem zu vermeiden oder zumindest zu verbessern.

### Lösung

Die vorliegende Erfindung wird durch die Ansprüche definiert.

Eine Rundballenpresse umfasst eine Ballenbildungskammer, um deren Umfang antreibbare Förderelemente verteilt sind, die mittels eines Antriebsstranges in Bewegung versetzbar sind, um in die Ballenbildungskammer eingeführtes Material zu einem Ballen zu formen, und Vorschubmittel, die eingerichtet sind, Wickelmaterial von einem Vorrat in Richtung auf die Ballenbildungskammer zu bewegen, um einen in der Ballenbildungskammer fertiggestellten Ballen zu umwickeln. Ein Teil der Förderelemente ist während des Wickelvorgangs vom Antriebsstrang trennbar und mit den Vorschubmitteln koppelbar.

Auf diese Weise erreicht man, dass der besagte Teil der Förderelemente während des Wickelvorgangs durch den zu umwickelnden Ballen angetrieben wird und die Vorschubmittel mit einer von der jeweiligen Umfangsgeschwindigkeit des Ballens abhängigen Geschwindigkeit antreibt. Somit hängt die Vorschubgeschwindigkeit des Wickelmaterials direkt von der Umfangsgeschwindigkeit des Ballens ab und die im Stand der Technik vorliegenden Nachteile werden vermieden.

### Ausführungsbeispiel

In den Zeichnungen ist ein nachfolgend näher beschriebenes Ausführungsbeispiel der Erfindung dargestellt, wobei die Bezugszeichen nicht zur einschränkenden Auslegung herangezogen werden sollen. Es zeigt:
- Fig. 1: eine Rundballenpresse mit einer Vorrichtung zum Umwickeln eines Ballens und
einem Zugfahrzeug in Seitenansicht und in schematischer Darstellung, und
- Fig. 2: ein Schema des Antriebs der Rundballenpresse der Figur 1.

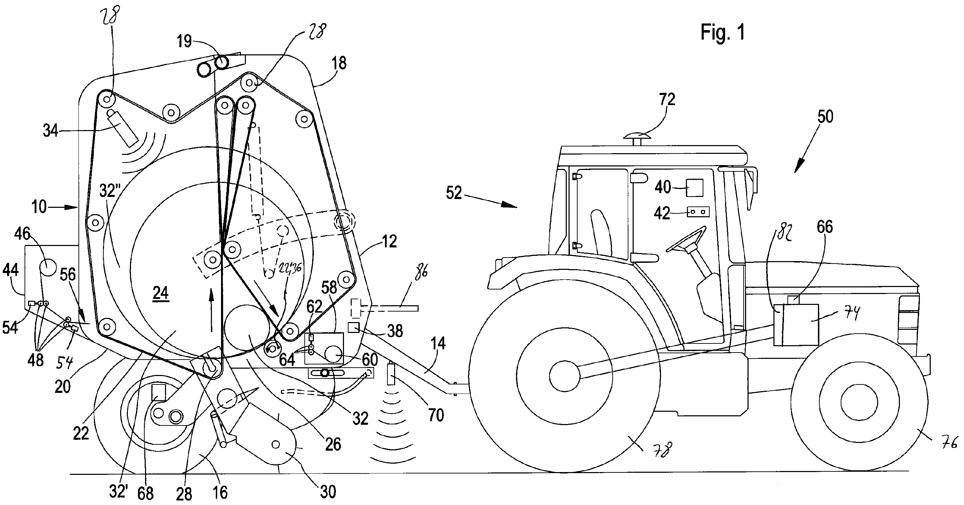

Die Figur 1 zeigt eine Rundballenpresse 10 mit einem Gehäuse 12, das mittels einer Deichsel 14 an einer Kupplungsöse eines Zugfahrzeugs 50 in Form eines Ackerschleppers angehängt werden kann, um bezüglich der Figur 1 nach rechts in einer Fahrtrichtung über ein Feld gezogen zu werden, und sich auf Rädern 16 abstützt. Das Gehäuse 12 setzt sich aus einer vorderen, starren Gehäusehälfte 18 und einer rückwärtigen, schwenkbaren Gehäusehälfte 20 zusammen, die in einem oben liegenden Gelenk 19 schwenkbar miteinander verbunden sind. Das Gehäuse 12 trägt eine Vielzahl von Walzen 28. Über die Walzen 28 verlaufen mehrere nebeneinander angeordnete endlose Förderelemente 22, die zusammen mit Seitenwänden des Gehäuses 12 eine Ballenbildungskammer 24 größtenteils umgeben. In diesem Ausführungsbeispiel sind die Förderelemente 22 größtenteils als Riemen ausgebildet, wobei jedoch ein Förderelement 22' als Walze 36 gestaltet ist. In dem unteren Bereich der Ballenbildungskammer 24 ist ein Einlass 26 vorgesehen, der rückwärtig von einer Walze 28 begrenzt wird und von einem Aufnehmer 30 aufgenommenes Gut in die Ballenbildungskammer 24 eintreten lässt. Die Walze 36 befindet sich oberhalb des Einlasses 26 und davor.

Die Rundballenpresse 10 umfasst mehrere seitlich nebeneinander angeordnete Förderelemente 22. Sie werden beim Erntebetrieb in Bewegung versetzt und umschließen einen sich in der Ballenbildungskammer 24 bildenden Ballen 32 nach vorn, oben und hinten. Der Aufbau und die Funktion einer derartigen Rundballenpresse sind an sich bekannt. Es wird auf die Offenbarung der DE 101 53 540 A verwiesen, deren Inhalt durch Verweis mit in die vorliegenden Unterlagen aufgenommen wird. Mit den Bezugszeichen 32, 32' und 32" sind Ballen anwachsenden Durchmessers gekennzeichnet.

Am rückwärtigen, oberen Ende der rückwärtigen, schwenkbaren Gehäusehälfte 20 ist ein Sensor 34 befestigt. Der Sensor 34 ist ein Ultraschallentfernungsmesser, der auf einer Laufzeitmessung beruht und erfasst den Abstand zwischen ihrer Unterseite und den benachbarten Fördermitteln 22, die unmittelbar am äußeren Umfang des Ballens 32 anliegen. Der Sensor 34 stellt auf diese Weise eine Information über den Durchmesser des Ballens 32 bereit.

Die Rundballenpresse 10 umfasst weiterhin einen ersten Wickelmaterialspender 44, der an der Rückseite der rückwärtigen, schwenkbaren Gehäusehälfte 20 angeordnet ist. Der Wickelmaterialspender 44 umfasst einen Vorrat 46 an Wickelmaterial, das aus einem aufgerollten Netz oder einer Folie besteht, deren vorderes, abgewickeltes Ende zwischen Paaren von als Vorschubmittel dienenden Rollen 48 hindurchgeführt ist. Die Rollen 48 sind durch einen Antrieb 54 in Drehung versetzbar, so dass das vordere Ende des Wickelmaterials bei aktiviertem Antrieb 54 durch die Fördermittel 22 mitgezogen wird, in die Ballenbildungskammer 24 gelangt und dort den Ballen 32 umhüllt. Zwischen dem Antrieb 54 und den Rollen 48 ist ein Freilauf (nicht gezeigt) angeordnet, damit der Ballen 32 das Wickelmaterial beim Umwickeln vom Vorrat 46 abziehen kann, ohne den Antrieb 54 mitzudrehen. Außerdem umfasst der erste Wickelmaterialspender 44 eine Trenneinrichtung 56, um nach dem Wickelvorgang das Wickelmaterial abzuschneiden.

Ein zweiter Wickelmaterialspender 58 befindet sich an der Vorderseite der Rundballenpresse 10 und umfasst einen Vorrat 60 an Wickelmaterial, das aus Garn besteht. Der zweite Wickelmaterialspender 58 umfasst ebenfalls ein Paar von als Vorschubmittel dienenden Rollen 64, die mittels eines Antriebs 62 antreibbar sind, um das vordere Ende des Wickelmaterials in die Ballenbildungskammer 24 einzuführen, so dass es dort durch den Ballen 32 mitgenommen wird und diesen umhüllt. Das Wickelmaterial wird sukzessive über die Breite des Ballens 32 geführt, indem der ganze Wickelmaterialspender 58 oder eine Auslassöffnung kontinuierlich seitlich bewegt wird. Zwischen dem Antrieb 62 und den Rollen 64 ist ein Freilauf (nicht gezeigt) angeordnet, damit der Ballen 32 das Wickelmaterial beim Umwickeln vom Vorrat 60 abziehen kann, ohne den Antrieb 62 mitzudrehen. Außerdem umfasst der erste Wickelmaterialspender 44 eine Trenneinrichtung (nicht gezeigt), um nach dem Wickelvorgang das Wickelmaterial abzuschneiden.

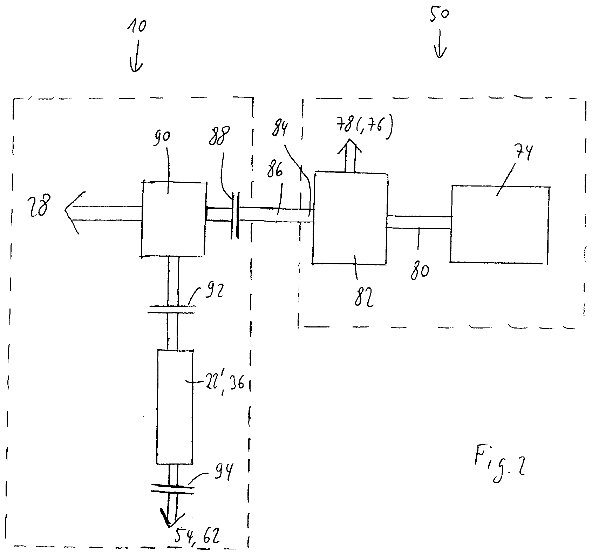

Über eine Busleitung ist der Sensor 34 mit einer Steuerung 38 verbunden, die wiederum eine in der Fahrerkabine 52 des Zugfahrzeugs 50 angeordnete Anzeigeeinrichtung 40 ansteuert und Instruktionen von einer ebenfalls dort angeordneten Eingabeeinrichtung 42 erhält. Die Steuerung 38 ist außerdem mit Aktoren zur Betätigung von Kupplungen 88, 92 und 94 (vgl. Figur 2), einer Geschwindigkeitsvorgabeeinrichtung (Motor- und Getriebesteuerung) 66 des Zugfahrzeugs 50, einem Geschwindigkeitssensor 68 in Form eines Drehzahlsensors zur Erfassung der Umdrehungszahl der Räder 16, einem Durchsatzsensor 70, der an der Unterseite der Deichsel 14 montiert ist und das von der Pickup 30 aufzunehmende Schwad optisch oder mit Ultraschallwellen abtastet, um sein Volumen festzustellen, und einer Positionsbestimmungseinrichtung 72 gekoppelt. Die Steuerung 38 kann insbesondere in der in DE 10 2009 002 439 A1, deren Offenbarung durch Verweis mit in die vorliegenden Unterlagen aufgenommen wird, beschriebenen Weise vorgehen, um zu erkennen, wann es an der Zeit ist, einen Ballen zu umwickeln.

Die Figur 2 zeigt den Antriebsstrang der Rundballenpresse 10 schematisch. Die Kurbelwelle 80 des Verbrennungsmotors 74 ist mit einem Getriebe 82 gekoppelt, das einerseits einen Antriebsstrang zu den antreibbaren Hinterrädern 78 des Zugfahrzeugs 50 (und ggf. zu den lenkbaren Vorderrädern 76) antreibt, andererseits auch einen Zapfwellenausgang 84 antreibt, der durch eine Gelenkwelle 86 die beweglichen Elemente der Rundballenpresse 10 antreibt. Seitens der Rundballenpresse 10 treibt die Gelenkwelle 86 über eine erste Kupplung 88 ein Verteilergetriebe 90 an, das wiederum eine oder mehrere der Walzen 28 antreibt, die wiederum die Förderelemente 22 antreiben. Ein Ausgang des Verteilergetriebes 90 ist über eine zweite Kupplung 92 mit der Walze 36 verbunden. Die Walze 36 ist über eine dritte Kupplung 94 mit den Antrieben 54 und/oder 62 koppelbar. Die Kupplung 88 könnte auch durch eine Zapfwellenkupplung (nicht gezeigt) des Zugfahrzeugs 50 ersetzt oder ergänzt werden, welche die Funktion der Kupplung 88 übernimmt.

Im Folgenden wird nun der Betrieb der Rundballenpresse 10 beschrieben.

Im normalen Ballenbildungsbetrieb veranlasst die Steuerung 38 auf eine Eingabe des Bedieners über die Eingabeeinrichtung 42 hin, dass die erste Kupplung 88 und die zweite Kupplung 92 geschlossen sind. Die dritte Kupplung 94 ist geöffnet. Die Fördermittel 22, 22' bewegen sich somit und durch den Einlass 26 einlaufendes Material (Erntegut) wird nach und nach zu einem Ballen 32 kontinuierlich anwachsenden Durchmessers geformt, während das Zugfahrzeug 50 die Rundballenpresse 10 entlang eines Schwads zieht und der Aufnehmer 30 das Erntegut in den Einlass 26 fördert.

Auf eine manuelle Eingabe des Bedieners in die Eingabeeinrichtung 42 oder wenn die Steuerung 38 erkennt, dass eine vorgebbare Größe des Ballens 32 erreicht ist, weist die Steuerung 38 den Bediener über die Anzeigeeinrichtung 40 darauf hin, dass nun ein Wickelvorgang bevorsteht und er das Zugfahrzeug 50 anhalten möge. Das Anhalten kann auch durch die Steuerung 38 selbsttätig über die Geschwindigkeitsvorgabeeinrichtung 66 erfolgen. Die Steuerung 38 veranlasst nun, dass die erste Kupplung 88 weiterhin geschlossen bleibt, die zweite Kupplung 92 geöffnet wird und die dritte Kupplung 94 geschlossen wird. Dadurch wird einer der Antriebe 54 oder 62 in Bewegung versetzt, um das Wickelmaterial vom Vorrat 46 oder 60 in die Ballenbildungskammer 24 hinein zu fördern, während der Ballen 32 weiterhin durch die Fördermittel 22, nicht aber mehr durch die Walze 36 der Fördermittel 22' angetrieben wird. Durch in der Figur 2 nicht gezeigte, mechanisch betätigte Kupplungen kann der Bediener auswählen, welcher der Antriebe 54 oder 62 aktiviert wird. Bei einer fortgeschrittenen Ausführungsform kann diese Auswahl über die Eingabeeinrichtung 42 und die Steuerung 38 erfolgen, die entsprechende Kupplungen elektromechanisch oder elektrohydraulisch kontrollieren kann, um das Wickelmaterial auszuwählen.

Der Antrieb der Walzen 48 bzw. 64 erfolgt nach alledem über die (von ihrem durch die zweite Kupplung 92 von ihrem sie bei der Ballenbildung antreibenden Antriebsstrang getrennte) Walze 36, die ihrerseits durch Reibung durch den Ballen 32 angetrieben wird, mechanisch über die dritte Kupplung 94 und die Antriebe 54 oder 62. Dadurch wird sichergestellt, dass das Vorschubmittel mit genau der Umfangsgeschwindigkeit des Ballens 32 (oder um einen festgelegten Prozentsatz langsamer) angetrieben wird, sodass auch dann, wenn der Ballen 32 gegenüber den Fördermitteln 22 rutschen sollte, das Wickelmaterial nicht schneller eingeführt wird als der Ballen 32 dreht. Auf diese Weise werden unerwünschte Schlaufenbildungen im Wickelmaterial vermieden und verhindert, dass sich das Wickelmaterial z.B. um die Walze 36 wickelt.

Nach dem vollständigen Umwickeln des Ballens 32 werden die erste und dritte Kupplung 88, 94 getrennt und der Ballen 32 nach Öffnen der rückwärtigen, schwenkbaren Gehäusehälfte 20 aus der Rundballenpresse 10 ausgeworfen. Anschließend kann ein neuer Ballen 32 erzeugt werden.

Anzumerken bleibt, dass die Rundballenpresse bei einer anderen Ausführungsform auch als Festkammerpresse ausgeführt sein kann, bei der eine Anzahl an Walzen um den Umfang der Ballenbildungskammer verteilt ist. Eine dieser Walzen entspricht dann der Walze 36 der hier gezeigten Ausführungsform. Es wäre auch denkbar, anstelle der rückwärtigen, schwenkbaren Gehäusehälfte 20 nur einen Träger nach oben zu schwenken, der einige der Walzen 28 trägt, vgl. EP 1 795 065 A1 und dort zitierte Referenzen, bzw. einige direkt mit dem Erntegut zusammenwirkende Walzen an einem beweglichen Träger anzubringen, vgl. DE 10 2009 002 585 A1. Die Kupplungen 92, 94 müssen nicht als Scheibenkupplungen ausgeführt sein, wie in der Figur 2 gezeigt, sondern können als Riemenkupplungen gestaltet werden. Letztere können auch auf derselben Seite der Walze 36 angebracht sein und insbesondere durch einen einzigen Aktor wechselweise betätigt werden.

## Patentansprüche

1. Rundballenpresse (10), umfassend:
eine Ballenbildungskammer (24), um deren Umfang antreibbare Förderelemente (22, 22') verteilt sind, die mittels eines Antriebsstranges in Bewegung versetzbar sind, um in den Ballenpressraum (24) eingeführtes Material zu einem Ballen (32) zu formen, und
Vorschubmittel, die eingerichtet sind, Wickelmaterial von einem Vorrat (46, 60) in Richtung auf die Ballenbildungskammer (24) zu bewegen, um einen in der Ballenbildungskammer (24) fertiggestellten Ballen (32) zu umwickeln,
**dadurch gekennzeichnet, dass** ein Teil (22') der Förderelemente (22, 22') durch eine Kupplung (92) trennbar mit dem Antriebsstrang verbunden und durch eine andere Kupplung (94) antriebsmäßig mit den Vorschubmitteln koppelbar ist und eine Steuerung (38) betreibbar ist, die Kupplungen (92, 94) derart anzusteuern, dass der besagte Teil der Förderelemente (22') während des Wickelvorgangs vom Antriebsstrang getrennt und mit den Vorschubmitteln gekoppelt ist, sodass der besagte Teil (22') der Förderelemente (22, 22') während des Wickelvorgangs durch den zu umwickelnden Ballen (32) angetrieben wird und die Vorschubmittel mit einer von der jeweiligen Umfangsgeschwindigkeit des Ballens (32) abhängigen Geschwindigkeit antreibt.

2. Rundballenpresse (10) nach Anspruch 1, wobei der Teil (22') der Förderelemente (22, 22') eine Walze (36) ist.

3. Rundballenpresse (10) nach Anspruch 1 oder 2, wobei das Wickelmaterial ein Netz, Garn oder Folie ist.

4. Verfahren zum Betreiben einer Rundballenpresse (10), die eine Ballenbildungskammer (24), um deren Umfang antreibbare Förderelemente (22, 22') verteilt sind, die mittels eines Antriebsstranges in Bewegung versetzbar sind, um in den Ballenpressraum (24) eingeführtes Material zu einem Ballen (32) zu formen, und Vorschubmittel umfasst, die eingerichtet sind, Wickelmaterial von einem Vorrat (46, 60) in Richtung auf die Ballenbildungskammer (24) zu bewegen, um einen in der Ballenbildungskammer (24) fertiggestellten Ballen (32) zu umwickeln, **dadurch gekennzeichnet, dass** ein Teil (22') der Förderelemente (22, 22') während des Wickelvorgangs vom Antriebsstrang getrennt und mit den Vorschubmitteln gekoppelt wird, sodass der besagte Teil (22') der Förderelemente (22, 22') durch eine Kupplung (92) trennbar mit dem Antriebsstrang verbunden und durch eine andere Kupplung (94) antriebsmäßig mit den Vorschubmitteln koppelbar ist und eine Steuerung (38) betreibbar ist, die Kupplungen (92, 94) derart anzusteuern, dass der besagte Teil der Förderelemente (22') während des Wickelvorgangs durch den zu umwickelnden Ballen (32) angetrieben wird und die Vorschubmittel mit einer von der jeweiligen Umfangsgeschwindigkeit des Ballens (32) abhängigen Geschwindigkeit antreibt.

## Claims

1. Round baler (10), comprising:
a baling chamber (24), around the circumference of which drivable conveying elements (22, 22') are distributed and can be set into motion by means of a drive train in order to shape material introduced into the baling chamber (24) into a bale (32), and
feeding means which are designed to move wrapping material from a store (46, 60) in the direction of the baling chamber (24) in order to wrap a bale (32) completed in the baling chamber (24),
**characterized in that** a part (22') of the conveying elements (22, 22') is connected separably to the drive train by one coupling (92) and can be coupled in terms of drive to the feeding means by another coupling (94), and a controller (38) can be operated to activate the couplings (92, 94) in such a manner that said part of the conveying elements (22') is separated from the drive train during the wrapping operation and is coupled to the feeding means, and therefore said part (22') of the conveying elements (22, 22') is driven during the wrapping operation by the bale (32) to be wrapped and drives the feeding means at a speed which is dependent on the respective circumferential speed of the bale (32).

2. Round baler (10) according to Claim 1, wherein the part (22') of the conveying elements (22, 22') is a roller (36).

3. Round baler (10) according to Claim 1 or 2, wherein the wrapping material is a mesh, twine or film.

4. Method for operating a round baler (10) which comprises a baling chamber (24), around the circumference of which drivable conveying elements (22, 22') are distributed and can be set into motion by means of a drive train in order to shape material introduced into the baling chamber (24) into a bale (32), and feeding means which are designed to move wrapping material from a store (46, 60) in the direction of the baling chamber (24) in order to wrap a bale (32) completed in the baling chamber (24), **characterized in that** a part (22') of the conveying elements (22, 22') is separated from the drive train during the wrapping operation and coupled to the feeding means such that said part (22') of the conveying elements (22, 22') is connected separably to the drive train by one coupling (92) and can be coupled in terms of drive to the feeding means by another coupling (94), and a controller (38) can be operated to activate the couplings (92, 94) in such a manner that said part of the conveying elements (22') is driven during the wrapping operation by the bale (32) to be wrapped and drives the feeding means at a speed which is dependent on the respective circumferential speed of the bale (32).

## Revendications

1. Presse à balles rondes (10) comprenant :
une chambre de formation de balle (24) sur la circonférence de laquelle sont répartis des éléments de transport entraînables (22, 22') qui peuvent être mis en mouvement au moyen d'une chaîne cinématique pour mettre en forme le matériau, introduit dans la chambre de pressage de balle (24), pour obtenir une balle (32), et
des moyens d'avancement qui sont conçus pour déplacer le matériau d'enveloppe d'un réservoir (46, 60) en direction de la chambre de formation de balle (24) afin d'envelopper une balle (32) produite dans la chambre de formation de balle (24),
**caractérisée en ce qu'**une partie (22') des éléments de transport (22, 22') est reliée de manière séparable à la chaîne cinématique par le biais d'un dispositif d'accouplement (92) et peut être accouplée en entraînement aux moyens d'avancement par le biais d'un autre dispositif d'accouplement (94) et une commande (38) peut être mise en œuvre pour commander les dispositifs d'accouplement (92, 94) de telle sorte que ladite partie des éléments de transport (22') soit séparée de la chaîne cinématique pendant le processus d'enveloppe et soit accouplée aux moyens d'avancement de telle sorte que ladite partie (22') des éléments de transport (22, 22') soit entraînée par la balle (32) à envelopper pendant le processus d'enveloppe et entraîne les moyens d'avancement à une vitesse de la balle (32) qui dépend de la vitesse circonférentielle respective.

2. Presse à balles rondes (10) selon la revendication 1, la partie (22') des éléments de transport (22, 22') étant un rouleau (36).

3. Presse à balles rondes (10) selon la revendication 1 ou 2, le matériau d'enveloppe étant un filet, un fil ou un film.

4. Procédé pour faire fonctionner une presse à balles rondes (10) qui comprend une chambre de formation de balle (24) sur la circonférence de laquelle sont répartis des éléments de transport entraînables (22, 22') qui peuvent être mis en mouvement au moyen d'une chaîne cinématique pour mettre en forme le matériau, introduit dans la chambre de pressage de balle (24), pour obtenir une balle (32), et qui comprend des moyens d'avancement qui sont conçus pour déplacer le matériau d'enveloppe d'un réservoir (46, 60) en direction de la chambre de formation de balle (24) afin d'envelopper une balle (32) produite dans la chambre de formation de balle (24), **caractérisé en ce qu'**une partie (22') des éléments de transport (22, 22') est séparée de la chaîne cinématique pendant le processus d'enveloppe et accouplée aux moyens d'avancement de sorte que ladite partie (22') des éléments de transport (22, 22') soit reliée de manière séparable à la chaîne cinématique par un dispositif d'accouplement (92) et puisse être accouplée en entraînement aux moyens d'avancement par un autre dispositif d'accouplement (94) et une commande (38) peut être mise en œuvre pour commander les dispositifs d'accouplement (92, 94) de telle sorte que ladite partie des éléments de transport (22') soit entraînée par la balle (32) à envelopper pendant le processus d'enveloppe et entraîne les moyens d'avancement à une vitesse qui dépend de la vitesse circonférentielle respective de la balle (32).
